# EUROPEAN PATENT APPLICATION

(11) **EP 0 696 861 A1**
(43) Date of publication of application: **14.02.1996**
(21) Application number: 94410065.0
(22) Date of filing: 12.08.1994
(51) Int. Cl.: H04L 12/18, G06F 17/60, H04N 1/42

(54) **Item identification in a distributed system**

(71) Applicant: HEWLETT-PACKARD COMPANY, Palo Alto, California 94304-1181 (US)
(72) Inventor: Martin, Anthony Gary c/o Hewlett-Packard France, 38053 Grenoble Cedex 9 (FR)
(74) Representative: Squibbs, Robert Francis

(57) **Abstract**

A document conferencing system may take the form of several document conferencers that communicate with each other over the public switched telephone network. In such systems, it is important to uniquely identify documents and their pages; however, it is also useful to retain identification links between versions of the same basic document or document page. A format of identifying label is described for document and page items. The label comprises first and second parts (41, 42) each intended to be unique in the document conferencing system, the first part (41) being kept constant independent of changes effected to the item concerned, whilst the second part (42) is changed each time the item is changed. Each label part may comprise a machine ID (43) uniquely identifying the conferencer on which the item was generated, and a timestamp (44) indicative of the time of generation of the item on that conferencer. A similar approach may be used in other distributed systems requiring unique identification of data items.

## Description

### FIELD OF THE INVENTION

The present invention relates to item identification in a distributed system and in particular, but not exclusively, to page identification in document conferencing system.

### DISCUSSION OF THE PRIOR ART

Document conferencing systems are known in which document page data is transferred electronically between remote conferencing stations (herein referred to as "conferencers") over telephone lines to enable remote users to view and discuss the same document page. It is also known to permit each end user, at least when off-line, to make changes to document page data.

With any such system, it is important to be able to identify uniquely each document page in the system with each particular version of a page being distinguishable from every other version of the same page.

One known system for identifying document components in a conferencing system is described in US-A-4,654,483 (Fujitsu) where picture components are identified using a three part number, these parts being a first part corresponding to a unique identifier for the storage medium (for example, floppy disc) used to store the picture data, a second part corresponding to a location on the storage medium for the picture, and a third part indicating the version number of the picture component(that is, to what version of a basic picture does the picture component belong). With this scheme, upon creation of a new picture (a new basic picture component), its absolute identifier number is determined by the floppy disk on which it is first stored, its location number on that disk, and its version number which will be 1. This absolute identifier is used to identify the basic picture component even when transferred to a different machine and different storage medium. If the picture component is added to, then the additions are treated as a separate picture component having an absolute identifier number whose first and second parts correspond to the first and second parts of the basic picture component number; however, the third part, the version number, will be changed to indicate that this picture item corresponds to a change to the basic picture. An important point to note is that all the picture items relating to the same basic picture are stored in the same disk location for any particular machine (although these locations may differ between machines). The association of picture items with the same basic picture is thus through where they are stored.

The absolute identifier scheme described above has a weakness as is admitted in US-A-4,654,483, this being that independently made changes to a picture (that is, changes made on different machines) can end up with the same absolute identifier number. To overcome this weakness, a modified scheme is proposed in US-A-4,654,483 such that whenever a picture is changed, the changes are saved as a picture item with an absolute number made up of a first part corresponding to the floppy disk identifier for the machine on which the change is made, a second part corresponding to the location on that machine of picture items associated with the corresponding picture, and a third part being an increment by 1 of the last known change number (it does not matter that this might be the same as the third part number on another machine). This arrangement results in truly unique absolute identifier numbers for all picture items. However, it does mean that the only association of the various picture items needed to make up a complete picture, is through where they are stored on the floppy disc at each station.

It is an object of the present invention to provide an improved page identification system for a document conferencer.

### SUMMARY OF THE INVENTION

According to one aspect of the present invention, there is provided a document conferencer for displaying and editing document pages and for exchanging such pages with other document conferencers to form a document conferencing system, the conferencer comprising:
-- an item management system for creating, storing and managing items including item data, at least some of these items being page items each representing a document page and for which the item data corresponds to the contents of the document page,
-- display means for displaying a selected item,
-- input means for selecting an item for display and through which changes can be made to the item data of the displayed item, and
-- item exchange means for exchanging item information with other conferencers; each page item having an identifier label by which it is identified to the management system, this label comprising first and second parts each intended to be unique in said document conferencing system, the first part being kept constant independent of changes effected to the page data of the page item, whilst the second part is changed each time the page data of the page item is changed; the management system including specifying means for specifying the first and second parts of the identifier label, the specifying means specifying the first part for a page item upon the creation of the latter by the conferencer, and specifying the second part for a page item when changes are made to the page data of the page item.

The first part of the identifier label thus provides a simple and convenient way of identifying all versions of the same page item whilst the second label part uniquely identifies each version. When a page item is changed thereby creating a new version, the responsibility for providing the new second label part will reside with the specifying means of the conferencer on which the changes were made unless the conferencer was in communication with another conferencer during the period when the changes were made and the document page concerned was shared by the conferencers; in this case, responsibility for updating the second label part will be agreed between the conferencers and the conferencer responsible for this updating will pass the updated label part to the other conferencer so that both conferencers end up with the same complete label for the shared changed document.

In a document conferencing system including first and second conferencers of the form, the first conferencer is operable to share a predetermined page item with the second conferencer using the item exchange means of both conferencers, the item exchange means of the first conferencer being operative initially to pass the identifying label of the said predetermined page from the first conferencer to the second without the item data, and the item exchange means of the second conferencer including:
-- check means for checking if a page item already exists at the second conferencer with the same identifying label as passed to it from the first conferencer, and
-- request means responsive to the absence of such label, for requesting the first conferencer to transmit the item data of the predetermined page to the second conferencer,
the item exchange means of the first conferencer responding to such request by passing the page item data.

Advantageously, the item management system of each conferencer is further arranged to create, store and manage document items each representing a document having at least one associated page item, each document item including the identifying label of each associated page item, and each document item being itself identified by a respective said identifying label of the same format as the identifying labels of the page items and being similarly specified by the specifying means, the specifying means specifying the first part of the identifying label of a document item upon the creation of the latter by the conferencer, and specifying the second part when changes are made either to the page composition of the document item or to the page data of any of its associated items.

Where the conferencers are so arranged to deal with documents, then when two conferencers wish to share a document, the identifying label of the document is passed from one conferencer to the other to enable the latter to check if it already has the document concerned. If it does not, it requests the document item data which identifies the page items making up the document. With this information, the receiving conferencer can further check whether it already has any of the pages making up the document and then request only outstanding pages. Pages already present at the receiving conferencer are duplicated; however, to avoid future ambiguities, the identifying labels of each page duplicated, and of the document including that page, is updated.

It is possible to arrange for the item management system of the conferencers to retain the superceded identifying label of an item each time the latter is changed and its identifying label updated, each identifying label thereby retained in respect of an item corresponding to a particular version of the item. In this case, the changes made to an item would preferably be recorded in the item's data in incremental format together with the identifying labels appropriate to each version of the item; such an arrangement would enable a selected version of the item to be extracted from the item's data given the identifying label corresponding to that version.

With such an arrangement, it may be possible to further minimise the amount of data that needs to be passed between conferencers when sharing an item since it is now possible, if an earlier version of an item already exists at the receiving conferencer, to pass only the changes that have been made since that earlier version.

With regard to the identifying label used for each item, each part of the label preferably comprises a machine ID uniquely identifying the conferencer specifying that part, and a timestamp.

The form of item identifying label described above can be used more widely than just in document conferencing systems. Thus, according to another aspect of the present invention, there is provided a data-handling unit for handling data items, the unit being connectable to other such units to form a system in which data items can be exchanged between units, the unit comprising:
-- an item management system for creating, storing and managing items that include item data,
-- modifying means for effecting changes to the item data of a selected item, and
-- item exchange means for exchanging item information with other units;
each item having an identifier label by which it is identified to the management system, this label comprising first and second parts each intended to be unique in the overall system, the first part being kept constant independent of changes effected to the item data of the item, whilst the second part is changed each time the item data of the item is changed; the management system including specifying means for specifying the first and second parts of the identifier label, the specifying means specifying the first part for an item upon the creation of the latter by the unit, and specifying the second part for an item when changes are made to the item data of the item.

The items concerned may be data items that are created and modified automatically in a distributed computer or telecommunications system; alternatively the items may comprise displayable data items intended to be modified by a user working at a display device that has appropriate input means for effecting changes to a displayed item.

### BRIEF DESCRIPTION OF THE DRAWINGS

A document conferencing system embodying the invention will now be particularly described by way of non-limiting example, with reference to the accompanying diagrammatic drawings:
- **Figure 1**: is a diagram of a document conferencing system in which two conferencers embodying the invention communicate over the public switched telephone network ;
- **Figure 2**: is a block diagram of one of the conferencers shown in Figure 1;
- **Figure 3**: is a diagram of the commands and data structures associated with the object management facility and file system of the Figure 2 conferencer;
- **Figure 4**: is a diagram illustrating the format of an identifier used to uniquely identify each document and page item known to the document conferencing system; and
- **Figure 5**: is a table of the main user commands applicable to operation of the Figure 2 conferencer.

### DESCRIPTION OF THE PREFERRED EMBODIMENT

### General Arrangement

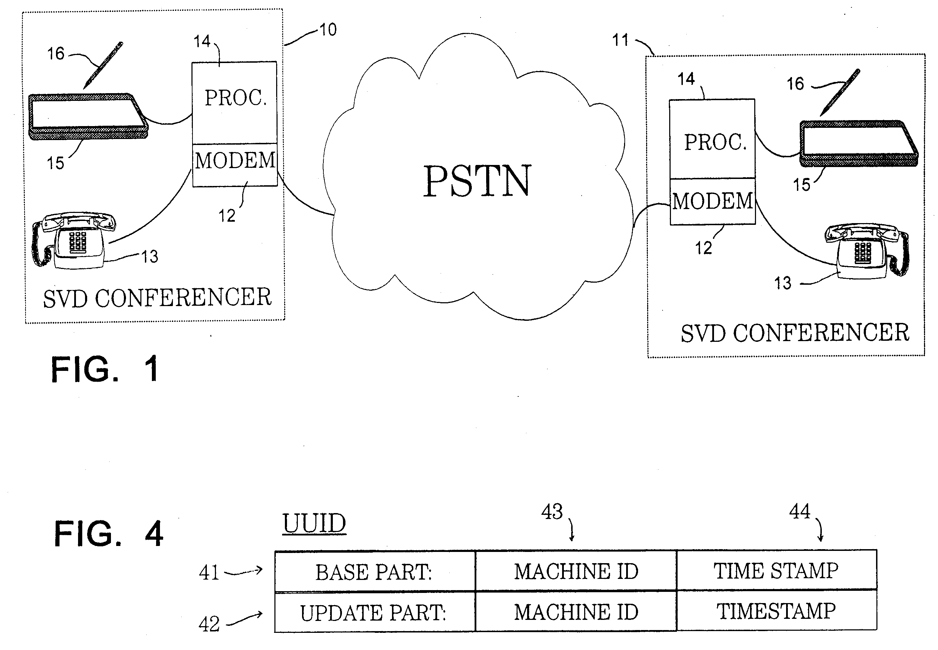

The document conferencing system shown in Figure 1 comprises two simultaneous-voice-and-data (SVD) conferencers 10 and 11 intercommunicating over the public switched telephone network (PSTN).

Each conferencer 10, 11 includes an SVD modem 12 such as produced by AT&T Paradyne of Florida, USA under the tradename "Voicespan". Each SVD modem 12 is operative to combine voice data from a telephone 13 and data from a processor unit 14 and to send out the combined data in modulated form across the PSTN; of course, each SVD modem 12 is also operative to demodulate a signal received over the PSTN and split it out into voice data and data for the processor unit 14.

The processor unit 14 of each conferencer has an associated input/output device in the form of a sketch-on-image tablet 15 and stylus 16. The tablet 15 provides a graphical user interface for displaying icons, command menus, text and images as required, and includes appropriate sensing means for sensing the position of the stylus 16 on the tablet thereby permitting the stylus to be used for menu command selection, icon activation and graphical input, such as hand-writing.

The SVD conferencers 10,11 can be used to conduct a remote conference between two users in such a manner that both users can view the same document page on their respective tablets 15 whilst discussing its contents using the telephones 13. The document page will generally have been exchanged between the conferencers at the start of the conference. During the course of the conference, either user may make graphical annotations to the document page being viewed and these annotations will automatically appear on the page image being viewed by the other user without interrupting the flow of speech.

In principle, conferences between more than two remote users are possible.

The present invention is concerned with the identification of document pages in an unambiguous manner in a document conferencing system, pages being the basic element for viewing and exchanging text and graphic data. Accordingly, a detailed description will not be given herein of the underlying hardware and operating system software used of the conferencers 10, 11, the page identification system of the invention being generally independent of such details and being implementable in a number of existing operating environments. In this respect, it is to be understood that the page identification system of the invention is not limited to SVD conferencing systems but can be used in any conferencing system where pages are exchanged between conferencers.

In describing the present embodiment of the invention, it will be assumed that the operation of the conferencers 10, 11 is based upon the concept of two main types of data items, namely;
- DOCUMENT ITEMS,
- PAGE ITEMS.

Each document item comprises one or more page items. More complex item hierarchies are, of course, possible (for example, a container item might also be used, containing zero, one or more documents), but for reasons of clarity, the present description is limited to document and page items.

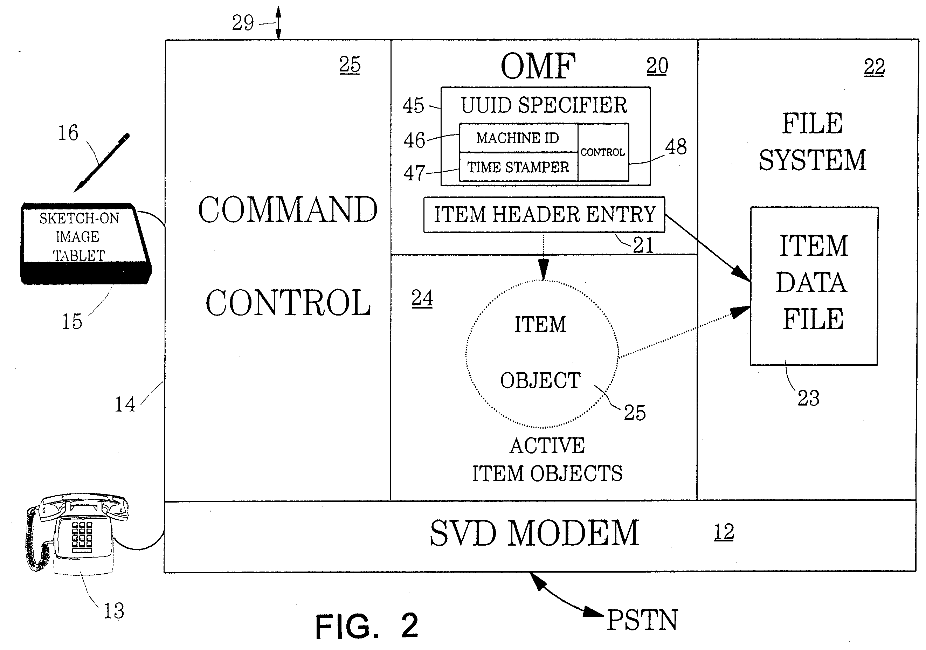

Each document and page item comprises an item header containing essential information on the item, one or more item data files, and when the item is "active", a software object which imports behaviour to the item characteristic of its type (document or page). The functionality of the processor unit 14 of each conferencer may be viewed in terms of how these item components are managed. Thus, with reference to Figure 2, the processor unit 14 comprises:
- an object management facility OMF 20 that maintains a table of all the item headers 21 known to the conferencer concerned;
- a file system 22 for storing item data files 23, each item header in the OMF including data associating it with the appropriate file or files 23; and
- an active object space 24 for instantiated objects 25 of activated items, these objects being created and destroyed by the OMF.

In addition, the processor unit 14 includes a command control section 25 providing overall control and, in particular, interpreting user input commands (supplied through the tablet 15) to initiate appropriate action either by the OMF (for example, to activate or deactivate items) or by currently active item objects 25 (for example, for a document object to display its pages, or for a page object to display its contents).

### The OMF and File System

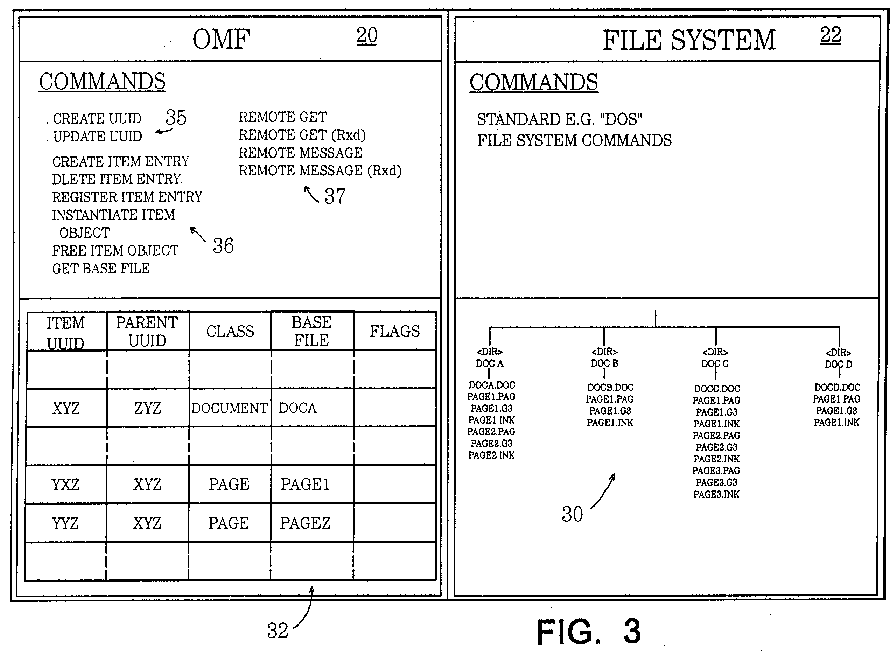

Figure 3 illustrates the commands and main data structures associated with the OMF 20 and file system 22. However, before describing Figure 3 in more detail, it is first necessary to explain the structure of the data part of a page item. In particular, each page is considered to be made up of two layers, namely a "background" layer (typically text, images, charts, drawings, tables, etc. represented in facsimile form) and an "ink" layer (typically annotations made using the stylus 16 on a page displayed on the tablet 15). The background and ink layers of a page are stored in respective data files having respective file extensions ".G3" and ".INK". Each page item also has a third data file associated with it, that contains a "thumbnail" of the page (that is, a reduced, sparse, image of the page); this file has an extension ".PAG".

Returning to Figure 3, the file system is, for example, implemented as a standard file system such a used in the DOS operating system, with a standard command set for creating and removing directories and files and for writing and reading to/from files. The file system 22 has a directory structure 30 which in the present example takes the form of a respective sub-directory for each document; in Figure 3, four documents DOC A, DOC B, DOC C, and DOC D are considered to be present, each with their own sub-directory. For each document, a corresponding file exists in the appropriate sub-directory, this file having an extension ".DOC".

Each document sub-directory contains the data files for each of the page items associated with the document, that is, three data files for each page. The file name for each page is "PAGE1", "PAGE2", "PAGE3", etc., as appropriate.

Turning now to a consideration of the OMF, this maintains a table 32 of all the item headers 21 known to the conferencer. Each item header comprises the following fields:
- ITEM UUID: -this field contains a Universal Unique Identifier (UUID) for the item concerned, uniquely identifying the item within the document conferencing system, (the form of the UUID is described in detail below);
- PARENT UUID: - this field holds the UUID of the item that is the parent item of the item under consideration (for a page item, the parent UUID identifies the document item containing the page whereas, in the present embodiment, all document items have the same parent corresponding to the 'desktop' of the conferencer);
- CLASS: - this field indicates whether the item header relates to a page item or a document item;
- BASE FILE: - this field holds the filename of the file containing the item data. (the file extension is specified later by the element making use of the filename information);
- FLAGS: - this field is used to hold various flags used in managing the item.

It will be seen that each item header includes sufficient information to permit the corresponding item data file(s) to be accessed, the full path of the files(s) in the file system directory structure being determinable by progressing up the chain of parent item references (in the present case, this chain is short, being for a page item, its parent document item and the desktop). In the present embodiment, the item header fields do not directly enable a document item to look up the UUIDs of its pages (though such an arrangement would be possible); however, this information is stored in the ".DOC" data file associated with a document item and so can be indirectly obtained.

The OMF 20 supports a set of commands, these commands being used by the command control section 25, by activated objects in the object space 24, and (for certain commands) by a remote conferencer. The commands are arranged in three groups of commands, these being a UUID command group 35, an Item Management command group 36, and a Remote command group 37. The main commands associated with these groups are outlined below.

### UUID Command Group 35:

CREATE UUID - for creating a UUID for an item newly present in the document conferencing system;
UPDATE UUID - for updating an existing UUID to indicate a change to the corresponding item.

### Item Management Command Group 36:

CREATE ITEM ENTRY - for adding the header of a newly created item to the table 32, given the appropriate data;
DELETE ITEM ENTRY - for removing from table 32 the header of an item being deleted from the system;
REGISTER ITEM ENTRY - for adding to the table 32, the header of a previously existing item, for example, transferred from another conferencer (this command is similar to CREATE ITEM ENTRY but checks for an existing table entry with the same UUID);
INSTANTIATE ITEM OBJECT - for instantiating an item object when an item is activated by the user, the object class being specified in the item header;
FREE ITEM OBJECT - for freeing a previously instantiated item object;
GET BASE FILE - for determining the full path of the data file(s) of an item.

### Remote Command Group 37:

REMOTE GET - for enabling an item object instantiated in the item object space to request the instantiation of a corresponding item object on a connected remote conferencer with the establishment of a communication channel between the item objects;
REMOTE GET (Rxd) - a REMOTE GET when passed to the connected remote conferencer is effectively received as a separate command by the OMF of that remote conferencer to do all that is necessary to instantiate the item object with which it is desired to communicate - this may involve obtaining the item details from the original requesting conferencer (the 'local conferencer'); once the item object on the remote conferencer is instantiated, a communication channel is set up between the item objects on the two conferencers;
REMOTE MESSAGE - for enabling an item object for which a communication channel has been established to a corresponding item object on another conferencer, to send a message to that item object;
REMOTE MESSAGE (Rxd) - a REMOTE MESSAGE passed to the connected remote conferencer is effectively received as a separate command by the OMF of that remote conferencer, and causes the remote conferencer to pass a message on to a specified item object.

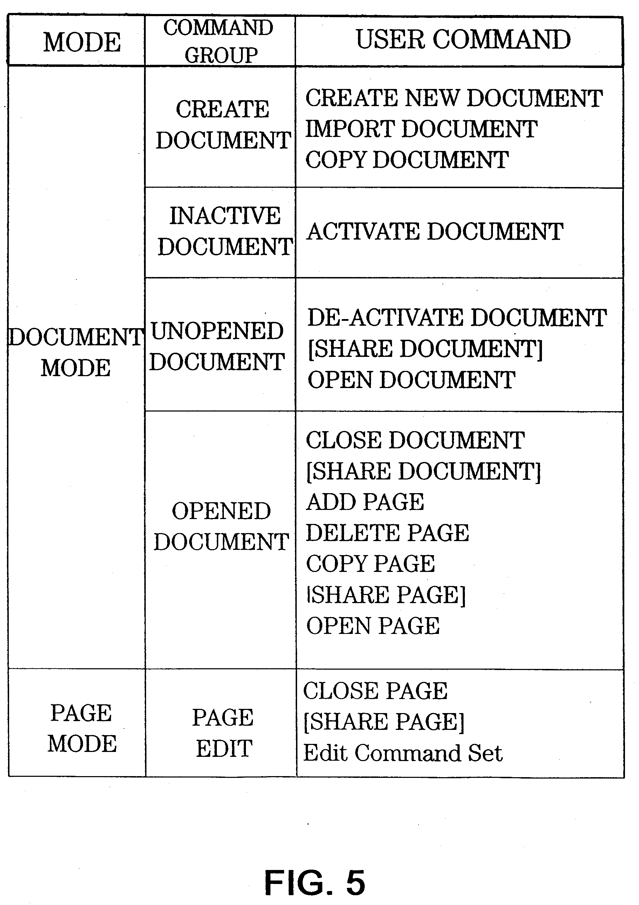

The foregoing OMF commands together with those of the file system, are used to implement the desired functionality of the conferencer, this functionality being expressed in the command set available to the user. A summary of the user command set and of how the command control section 25 translates these user commands into OMF and file system commands, will be given hereinafter with reference to Figure 5. However, before doing do, a description will be given of the format, generation and updating of the UUID used to identify each item in the system.

### The Item UUID

Each UUID comprises a base part 41 and an update part 42 (see Figure 4). Each UUID part comprises an identifier that is unique in the document conferencing system made up of all the conferencers with which the conferencer under consideration is likely to communicate, both now and in the future. In the present embodiment, each UUID part is made up of two elements, namely a machine ID 43 unique to the conferencer under consideration, and a timestamp 44 (for example, of millisecond or smaller granularity) which is guarenteed to be different from any other timestamp generated by the same conferencer (the timestamp will therefore generally include day, month, year information, possibly in the form of the number of seconds that have elapsed from a particular reference time).

The responsibility for creating and updating UUIDs, resides with the OMF 20 and the latter accordingly includes a UUID specifier 45 (see Figure 2). The UUID specifier 45 comprises a memory 46 that permanently stores the machine ID, a time stamper 47, and control means. When required, the control means generates a UUID part by combining the machine ID with a time stamp output by the time stamper 47, the time stamp corresponding to the then current time. In certain systems where the time stamper is based on a standard system clock, it may happen that the granularity of the time clock is inadequate and could lead to the same time stamp being provided for two successively-requested UUID parts. To overcome this problem, in such cases the time stamper can be arranged to store the last preceding time stamp output by it, and then before outputting a next time stamp, comparing the latter with the stored time stamp; if the two time stamps are the different, the next timestamp is output unchanged, otherwise it is incremented before output.

The UUID base part 41 is generated whenever a new item first becomes known to the document conferencing system either by being created locally on a conferencer or by being imported (for example by file transfer) from an external system. The conferencer which first sees the new item generates the UUID base part 41 for the item's UUID, this being done by the OMF 20 in response to a CREATE UUID command. The UUID base part 41, once generated remains fixed throughout the lifetime of the item concerned in the document conferencing system, regardless of changes to the item's data.

The UUID update part 42 is generated whenever an item has its data changed or, as will be described hereinafter, whenever an associated item (for example in the case of a page item, a different page of the same document item) is changed. The newly generated update part 42 replaces the previous update part in the overall item UUID. The update part is changed by the OMF in response to an UPDATE UUID command.

When a new UUID is created in response to a CREATE UUID command, the update part 42 may either be left blank or be filled with the same data as the base part 41.

### User Commands and Conference Operation

A description will now be given of the general operation of the conferencer with reference to the main commands available to the user through the interface provided by the sketch-on-image tablet 15, these commands being listed in Figure 5. It will be appreciated that generally the user will select the commands through appropriate interactions of the stylus 16 with the tablet 15 (for example, to open menus and select commands, to select icons representing document and page items, and to "drag and drop" such icons on action icons). The emphasis in the following description will be on how the UUIDs of document and page items are affected by the various actions initiated by the user commands.

The conferencer can be considered as operating in two modes, namely a document mode in which the user controls the creation, opening, storing and closing of documents on a displayed "desktop" background as well as effecting whole-page operations (add, delete, copy); and a page mode in which the user can edit the contents of a page displayed by the tablet 15. A user moves between these modes by opening a page item using OPEN PAGE (page mode entered) and by closing a page item using CLOSE PAGE (document mode entered). In Figure 5, the user commands are divided between the two modes, these modes being set out in the left hand column of the table of user commands. In fact, in Figure 5, within each mode the available commands are also arranged in groups (see column headed 'Command Group') according to function or when the commands are available. In the document mode, there are four command groups, namely Create Document, Inactive Document, Unopened Document and Opened Document. In the page mode there is only one command group, namely 'Page Edit'.

### The Create Document Commands

These commands are all concerned with providing a new document item to the conferencing system. This may be done by creating a new document item locally, by importing a document from an external system, or by copying an existing document to form a completely separate item.

CREATE NEW DOCUMENT - when the command control section 25 receives this command, it gets a new UUID from the OMF using the CREATE UUID command and then uses the CREATE ITEM ENTRY command to cause a new item header entry to be made in the table 32 for the document item. In addition, a second new UUID is obtained for a 'page 1' item for the document, and a corresponding entry is made in the table 32. Next, using the file system commands, a new directory is created for the document and the document data file (for example, called DOCX.DOC) is added to the directory. The UUID of the page-1 page item is stored in the DOCX.DOC file. A file PAGE1.PAG is also created with data representing a blank thumbnail; in the present embodiment, it will be assumed that the files PAGE1.G3 and PAGE1.INK are also created at this time, though this is not required. Having completed the foregoing operations, a new document item having one page has been introduced into the document conferencing system, though at present these items are only registered with the OMF 20 of one conferencer. The command control section 25 now uses the OMF command INSTANTIATE ITEM OBJECT to instantiate a document item object for the document and this object is then used to display on tablet 15 a document icon combining the document name and the thumbnail of page 1.

IMPORT DOCUMENT - this command is issued by the command control section 25 to import into the conferencer existing document data (for example, a one page document) already in a suitable data format, from an external system, such as a personal computer that is connected via an appropriate link 29 (see Figure 2) to the processor 14. As with the CREATE DOCUMENT command, new UUIDs are generated, using the OMF command CREATE UUID for the document and each of its pages and corresponding entries are made in table 32 using the OMF command CREATE ITEM ENTRY. A corresponding directory is created in the file system and a 'DOC' file is generated holding the page UUIDs. The data for each document page is then imported and stored in the appropriate file PAGE1.G3, PAGE2.G3 etc. Corresponding .PAG files are then generated each with a thumbnail of the data held in the associated .G3 file. Empty .INK files are also generated for each page. Finally, a corresponding document object is instantiated and used to cause the display of a document icon comprising the document name and the thumbnail of page 1.

COPY DOCUMENT - when a user requests a copy to be made of an existing document, it is possible to consider the copy either as being simply another version of the same original document as the copied document, or as being a completely new document having no linkages with the copied document. In the former case, the UUID of the document item and each page item would simply be subject to updating (using the OMF command UPDATE UUID) before being used for the copy, whilst in the latter case new UUIDs would be provided for the document item and each page item of the copy. Once the UUIDs for the document and page items of the copy have been provided, appropriate new item entries are made in the table 32, a new document directory is created in the file directory, new document and page data files are generated and data copied to these files from the original document. A document object is then instantiated for the copy document and used to display a new document icon in tablet 15.

### The Inactive Document Commands

This user command group (which only consists of one command) is applicable to any inactive document, that is, one that has no current active system presence, being only registered in the OMF and having data files, but not having a corresponding instantiated document object or displayed icon.

ACTIVATE DOCUMENT - by selecting a document from a displayed list of known documents, a user causes the command control section 25 to activate the document. This involves a corresponding document object being instantiated in the active object space 24 using the OMF command INSTANTIATE ITEM OBJECT. The instantiated document object will then display a document icon of the form already described, on the tablet 15.

In practice, the conferencer will normally implement containers (folders) for holding document. In this case, whenever the conferencer is in its document mode, every container will be represented by an icon which may be opened (using the stylus) to display its contents; at this point the documents held in the container will all be automatically activated, instantiating corresponding document objects and displaying their respective icons.

### The Unopened Document Commands

This user command group is applicable to any activated document that has not been opened, an 'unopened' document being one which only has its document object activated, there being no activated page objects for the document.

DE-ACTIVATE DOCUMENT - a user may choose to close or deactivate a document and this is done using the OMF command FREE ITEM OBJECT. This removes the document object from the active object space 24 and the document icon from the tablet display.

SHARE DOCUMENT- this user command is only available when the conferencer is in communication with another conferencer. The command causes the conferencers to share a document in a manner to be explained hereinafter. A shared document is marked as such on the tablet display.

OPEN DOCUMENT - a user may 'open' a document in which case a respective page object is instantiated for each document page, this being done under the control of the document's object once the command control section has notified it that it should open itself. The document object accesses its .DOC file to ascertain the UUIDs of its pages and then uses the OMF command INSTANTIATE ITEM OBJECT to generate corresponding page objects. Each page object then displays itself by causing the display on the tablet 15 of the page thumbnail held in the corresponding ".PAG" file.

### The Opened Document Commands

This user command group is applicable to any opened document, that is, one which has its page objects activated, each page being displayed on the tablet by its thumbnail.

CLOSE DOCUMENT - on the user choosing this command, the command control section 25 passes the command to the document object concerned which then oversees the closing of its associated page objects using the OMF command FREE ITEM OBJECT. The page thumbnails are removed from display whilst the document item remains displayed.

SHARE DOCUMENT- this user command is only available when the conferencer is in communication with another conferencer. The command causes the conferencers to share a document in a manner to be explained hereinafter. A shared document is marked as such on the tablet display.

ADD PAGE - this command causes the addition of a new, empty page to the document concerned, this procedure being controlled by the document object. To add a new page, a new UUID is first created (using CREATE UUID) and then a page-item header is entered into the table 32 (using CREATE ITEM ENTRY). The ".DOC" file is updated with the new page UUID and an appropriate ".PAG" file is added to the file system directory for the document concerned. Because the document, with the new page, differs from its previous form, the UUID of the document item is updated using the UPDATE UUID command.

DELETE PAGE - deleting a page is the reverse operation to adding a page and is again controlled by the document object. The relevant page data files are removed from the file system and the ".DOC" file is updated as is its UUID. The entry for the page is removed from table 32 using DELETE ITEM ENTRY.

COPY PAGE - this command is used to copy a page from the same or a different document into an opened document. The document object of the receiving document is first passed all the appropriate parameters concerning the data files of the page to be copied and the document object then controls: the generation of a new page item with a completely new UUID, the insertion of a new item entry in table 32, the creation of new page data files, and the copying of the page data into these files. As with the copying of documents, it would also be possible to retain a linkage between the original and copied page item by using for the copy page an updated version of the UUID of the original. The UUID of the document into which the page has been copied is also updated.

SHARE PAGE- this user command is only available when the conferencer is in communication with another conferencer. The command causes the conferencers to share a page in a manner to be explained hereinafter. A shared page is marked as such on the tablet display.

OPEN PAGE - as already mentioned, this command causes the conferencer to switch from its document mode to its page mode. In the page mode, the selected page is fully displayed on the tablet display.

### The Page Edit Commands

A range of commands are available for editing a displayed document page. In particular, commands are provided for annotating a document using the stylus 16, these commands being concerned with recording 'strokes' in the ".INK" file of the page item concerned. The set of Edit commands will not be described herein - however, two commands of the page edit command group are of interest.

CLOSE PAGE - As already mentioned, this command causes the conferencer to switch back from its page mode to its document mode.

SHARE PAGE - this user command is only available when the conferencer is in communication with another conferencer. The command causes the conferencers to share a page in a manner to be explained hereinafter. A shared page is marked as such on the tablet display.

### Document Sharing

As noted above, the SHARE DOCUMENT command causes an active document on one conferencer to be shared with another conferencer, the conferencers already being in communication. The steps involved in effecting this sharing are described below, it being assumed that a communication service is provided between the OMFs of the two conferencers enabling the exchange of control information by which document and page data can be reliably exchanged to share the selected document.

Upon the SHARE command being generated, the document object of the selected document uses the OMF command REMOTE GET to start the sharing process. The REMOTE GET is passed to the OMF of the remote conferencer and includes the UUID of the document to be shared. This REMOTE GET is received as a REMOTE GET (Rxd) by the remote OMF which then uses the REGISTER ITEM ENTRY to attempt to enter an item header for the document being shared in the remote OMF table 32.

If the document already exists on the remote conferencer so that the UUID of the document being shared already exists in the remote table 32, the REGISTER ITEM ENTRY does not add a new entry but notifies this fact to the remote OMF which, in turn, notifies the conferencer that initiated the sharing operation; the share operation is then complete.

If, on the other hand, the UUID does not already exist in the table 32 a new document item header is entered in the remote table 32 with the UUID of the document to be shared; following this the document data file is requested by the remote OMF and loaded into an appropriate directory on the remote file system. At this stage, the document item itself has been shared but not the document pages. The next action is therefore for the remote OMF to use the REGISTER ITEM ENTRY command to register each page item in turn (the UUIDs being available in the ".DOC" file) and cause the transfer of the page data files for all pages not found to already exist on the remote conferencer (by there being an exact UUID match in the table 32).

The situation may arise that whilst the document item of the document being shared does not exist on the remote conferencer, one (or more) of the page items does already exist. This situation might arise, for example, where an earlier version of the document has previously been shared and only some of the pages have subsequently been changed.

This situation is useful in that it permits the relatively long data transfer phase for the page(s) concerned to be skipped. However, since a new document is being created on the remote machine, the already existing page, which belongs to a different document, must be internally copied in the remote conferencer as one page item cannot be permitted to belong to two difference documents. This internal copying is, of course, much faster than transferring data over the PSTN. The copied page is given the UUID of the original page whilst the UUID of the latter is updated as is the UUID of the document item to which it belongs.

Once all the necessary items have been established on the remote conferencer, the document object for the remote document item is instantiated. If the document on the local conferencer is in an open condition (page objects instantiated), the remote items also have corresponding page objects instantiated bringing both documents into the same state. An appropriate 'shared' indication is then displayed against each item display on each conferencer.

It will be appreciated that the foregoing operation requires the exchange of a series of control signals between the two OMFs.

Upon a document becoming successfully shared across two conferencers, any change made at either conferencer to the document are implemented on both documents, the changes being passed between conferencers using the REMOTE MESSAGE command (if a change affects the document item it is the document object that initiates the REMOTE MESSAGE command, whilst if the change is to a page item, the corresponding page object initiates the command).

Preferably, rather than the UUIDs of changed pages and of the changed document being updated at each change, one of the OMFs (typically the one that initiated sharing) will note which pages have been changed and then at the end of the communication session between the conferencers, that OMF will update the UUIDs of all changed items and communicate these updated UUIDs to the other OMF. The latter then substitutes these updated UUIDs for the previous ones recorded for the item concerned, both in table 32 and the ".DOC" file.

### Page Sharing

The sharing of a complete document may involve an extended period of data exchange, particularly in the case of documents with a large number of pages. The SHARE PAGE command is provided to enable a selected page to be shared between conferencers without having to exchange all data relevant to the document to which the selected page belongs. This can be achieved in several ways one of which is described below.

Upon a SHARE PAGE command being generated it is passed to the page object of the selected page. This page object then uses a REMOTE GET command with the UUID of the document containing the page to see if, infact, the document does already exist on the remote conferencer since in this case it is possible to continue working with the document without the drawback of extended data transfers. If the document exists on the remote conferencer it is activated together with its page objects. However, if the document does not exist, then this is reported back to the relevant page object on the local conferencers (the OMF knows to do this rather than proceeding with document data transfer, by appropriate setting of a calling parameter when calling the REMOTE GET command).

The page object now proceeds to effect page sharing on a document independent basis by which is meant that on the remote conferencer the page will not be associated with its parent document but will effectively be treated as an isolated page and have its data stored in a special sub-directory set aside for such pages. This is achieved by the page object on the local machine issuing a REMOTE GET carrying the page UUID together with an indication that the page is to be treated as an isolated page by the remote conferencers. The OMF of this remote conferencer on receiving this REMOTE GET (Rxd), tries to register the page (without a parent UUID in its header) and if this operation is successful, the page data is then transferred into the sub-directory intended for isolated pages and, in particular, into files having a main filename part that is internally chosen by the remote conferencer to be unique for its 'isolated page' sub-directory (typically, the filename will be a name with a sequential numbering component) This filename was, infact, generated when the page header was put in the table 32, the filename being included in the header. The page item is then activated on the remote conferencer in a shared condition with the local conferencer.

It is conceivable that when an attempt is made to enter the item header for the isolated page into the table 32, an entry is found already to exist with this UUID. This situation is dealt with by updating the UUID of the existing page entry and the UUID of its parent document. The header for the page being shared can then be added and the relevant page data is copied internally on the remote conferencer from the data files of the previously conflicting item to files in the sub-directory for isolated pages.

Once a page has been shared, changes made to the page on one conferencer will be duplicated on the connected conferencer(s).

### Use of Version Information

The fact that different versions of the same document or page item have the same UUID base part allows these versions to be identified and listed - indeed, this can generally be done in date order as the timestamp will include date information (this being necessary to avoid the possibility of two timestamps being the same). As a result, the latest version of a document or page can be identified.

Of course, in the conferencer described above, most versions of an item are overwritten by the next version and it is only in certain cases that distinct document or page items will have the same UUID BASE PART.

A variation to the above described arrangement can be used to enable the UUID to provide a complete version searching facility. In particular, whenever an item is changed and it is given an updated UUID, its previous header entry in table 32 is maintained and a new entry made for the updated UUID. Furthermore, the item data file contains data in a delta format - that is, changes made are discretely and sequentially listed without altering previous data; the changes made between versions of an item are grouped together and associated with the UUID of the resultant item versions. In this way, it is possible to establish a complete list of item versions by searching the table 32 on the basis of a common UUID base part, and then to re-create a particular version of interest by accessing the corresponding data files and building up the item so far as, and including, the changes associated with the UUID of the version required.

If complete version information is kept as described above, then when sharing a document or page, it now becomes useful not just to check for complete UUID matches of items, but also for matching on the UUID base part. In particular , if there is a base part match but disparity between update parts, then a search can be made to establish the most recent version in common; thereafter it is only necessary to transfer the delta data needed to change the common item version on the remote conferencer to the same item version as the local conferencer desires to share.

### Variants

The form of UUID described above can be used to uniquely identify data items other than page and document itmes. Thus, the UUID arrangment (including when each of the two parts are changed) could be used to identify charts or tables, that is, particular data objects. Additionally, the UUID arrangement could be used in systems where the item being identified is subject to being changed under machine control rather thatn through the intervention of a user.

## Claims

1. A data-handling unit for handling data items, the unit being connectable to other such units to form a system in which data items can be exchanged between units, the unit comprising:
-- an item management system for creating, storing and managing items that include item data,
-- modifying means for effecting changes to the item data of a selected said item, and
-- item exchange means for exchanging item information with other said units; each said item having an identifier label by which it is identified to the management system, this label comprising first and second parts each intended to be unique in said system, the first part being kept constant independent of changes effected to the item data of said item, whilst the second part is changed each time the item data of the item is changed; the management system including specifying means for specifying said first and second parts of said identifier label, the specifying means specifying said first part for a said item upon the creation of the latter by said unit, and specifying said second part for a said item when changes are made to the item data of said item.

2. A data-handling unit according to claim 1, wherein said specifying means comprises ID storage means for storing a machine ID intended to uniquely identify said unit in said system, timestamp generating means for generating timestamps each different from other timestamps generated by the same timestamp generating means, and control means for combining said machine ID with a timestamp provided by said timestamp generating means whereby to produce an identification element; each part of each said identifier label comprising a respective said identifying element.

3. A data-handling unit according to claim 2, wherein said timestamp generating means comprises:
-- storage means for storing the last preceding timestamp output by the timestamp generating means,
-- a time clock,
-- reading means operative upon a timestamp being required from the timestamp generating means by said control means, to read the current time recorded by the time clock as a potential timestamp, and
-- output means for comparing the timestamp held in said storage means with said potential timestamp and for outputting the latter from the timestamp generating means as a said timestamp only if the stored and potential timestamps differ.

4. A data-handling unit according to any one of the preceding claims, wherein said items comprise displayable data items, and said modifying means comprises:
-- display means for displaying a selected said displayable data item, and
-- input means for selecting a said displayable data item for display and through which changes can be made to the item data of the displayed item.

5. A document conferencer for displaying and editing document pages and for exchanging such pages with other document conferencers to form a document conferencing system, the conferencer comprising:
-- an item management system for creating, storing and managing items including item data, at least some of these items being page items each representing a document page and for which the item data corresponds to the contents of the document page,
-- display means for displaying a selected item,
-- input means for selecting an item for display and through which changes can be made to the item data of the displayed item, and
-- item exchange means for exchanging item information with other conferencers; each page item having an identifier label by which it is identified to the management system, this label comprising first and second parts each intended to be unique in said document conferencing system, the first part being kept constant independent of changes effected to the page data of the page item, whilst the second part is changed each time the page data of the page item is changed; the management system including specifying means for specifying the first and second parts of the identifier label, the specifying means specifying the first part for a page item upon the creation of the latter by the conferencer, and specifying the second part for a page item when changes are made to the page data of the page item.

6. A document conferencer according to claim 5, wherein each page item comprises at least one data file storing said page data, an item header including said identifier label for the page item and a file identifier for identifying the said at least one file of the page item, and, at least when said item is displayed, a page object for managing the behaviour of said page in response to user input through said input means; the management system comprising a file system for storing said files, means for keeping a list of said item headers for the page items known to the conferencer, and means for instantiating a said page object for a page item at least upon the page item being selected for display.

7. A document conferencer according to claim 6, wherein said item management system is further arranged to create, store and manage document items each representing a document having at least one associated page item, each document item including the said identifying label of each associated page item, and each document item being itself identified by a respective said identifying label of the same format as the identifying labels of the page items and being similarly specified by said specifying means, the specifying means specifying said first part of the identifying label of a document item upon the creation of the latter by the conferencer, and specifying said second part when changes are made either to the page composition of the document item or to the page data of any of its associated items.

8. A document conferencer according to claim 6 or claim 7, wherein said item management system is operative to retain the superceded identifying label of a said item each time the latter is changed and its identifying label updated, each identifying label thereby retained in respect of a said item corresponding to a particular version of the item, with all such labels having the same first part; and wherein changes to a said item are recorded in the item's data in incremental format together with the identifying labels appropriate to each version of the item whereby to enable a selected version of the item to be extracted from the item's data given the identifying label corresponding to that version.

9. A document conferencing system including first and second conferencers according to claim 6, the first conferencer being operable to share a predetermined said page item with the second conferencer using the item exchange means of both conferencers, the item exchange means of the first conferencer being operative initially to pass the identifying label of the said predetermined page from the first conferencer to the second without the item data, and the item exchange means of the second conferencer including:
-- check means for checking if a page item already exists at the second conferencer with the same identifying label as passed to it from the first conferencer, and
-- request means responsive to the absence of such label, for requesting the first conferencer to transmit the item data of the predetermined page to the second conferencer,
the item exchange means of the first conferencer responding to such request by passing the page item data.

10. A document conferencing system including first and second conferencers according to claim 7, the first conferencer being operable to share a predetermined said document item with the second conferencer using the item exchange means of both conferencers, the item exchange means of the first conferencer being operative initially to pass the identifying label of the said predetermined document from the first conferencer to the second without the item data, and the item exchange means of the second conferencer including:
-- check means for checking if an item already exists at the second conferencer with the same identifying label as passed to it from the first conferencer, and
-- request means responsive to the absence of such label, for requesting the first conferencer to transmit the item data of the item concerned to the second conferencer,
the item exchange means of the first conferencer responding to such request by passing the document item data, and the item exchange means of the second conferencer on receiving the document item data being operative to use its said check means and request means on each page identifying label included in the document item data passed to the second conferencer whereby to request page item data transmission only for those pages that do not already exist at the second conferencer, the item exchange means of the second conferencer further including means for duplicating any page item found already to exist at the second conferencer by the check means and for causing the specifying means of the second conferencer to update the identifying label of the already-existing page item and its associated document item.

11. A document conferencing system according to claim 9 or 10, wherein changes made on either said conferencer to a said item that is currently shared by both conferencers, are passed to the other said conferencer and are effected to the corresponding item at that conferencer, one said conferencer being responsible for the updating of the identifying labels of changed items by using its specifying means to locally generate new second parts of the identifying labels concerned, said one conferencer passing said new second parts to the conferencer that shares the items concerned and the specifying means of that conferencer using said new second parts to re-specify the second parts of the changed items existing on that conferencer.

12. A document conferencing system including first and second conferencers according to claim 8, the first conferencer being operable to share a predetermined said page item with the second conferencer using the item exchange means of both conferencers, the item exchange means of the first conferencer being operative initially to pass the identifying label of the said predetermined page from the first conferencer to the second without the item data, and the item exchange means of the second conferencer including:
-- check means for checking if a page item already exists at the second conferencer either with the same identifying label as passed to it from the first conferencer or with the same first part of said identifying label, and
-- request means responsive to the absence at the second conferencer of an identifying label having any part matching that passed by the first conferencer, to request the first conferencer to transmit the item data of the predetermined page to the second conferencer, said request means being further responsive to the identification by the check means of an identifying label with the same first part as that passed to the second conferencer by the first, but with a second part indicating that the item version at the second conferencer is an earlier one than that which the first conferencer wishes to share, to request the first conferencer to transmit the incremental changes recorded in the page item data at the first conferencer needed to be able to update the version at the second conferencer to that at the first,
the item exchange means of the first conferencer responding to such request by passing the requested page item data which is then used at the second conferencer in the construction thereat of the item being shared.

13. A document conferencer according to claim 5, wherein said specifying means comprises ID storage means for storing a machine ID intended to uniquely identify said conferencer in said conferencing system, timestamp generating means for generating timestamps each different from other timestamps generated by the same timestamp generating means, and control means for combining said machine ID with a timestamp provided by said timestamp generating means whereby to produce an identification element; each part of each said identifier label comprising a respective said identifying element.
